# EUROPEAN PATENT APPLICATION

(11) **EP 4 215 304 A1**
(43) Date of publication of application: **26.07.2023**
(21) Application number: 23151685.7
(22) Date of filing: 16.01.2023
(51) Int. Cl.: B23B 51/00, B23B 51/06

(54) **DRILLING INSERT WITH COOLANT RELIEF**

(30) Priority: 20.01.2022 US 202263301084 P
(71) Applicant: Allied Machine & Engineering Corporation, Dover, OH 44622 (US)
(72) Inventor: Deluca, Salvatore, Cadiz, 43907 (US); Ripple, Jason, Dover, 44622 (US); Lawrence, Corey, Dover, 44622 (US)
(74) Representative: Barker Brettell LLP

(57) **Abstract**

There is provided a drilling insert for drilling metallic or other materials, comprising a insert body with first and second lands at the outside diameter of the body that interface with the wall of a drilled hole. There is provided a coolant relief arrangement at the outside diameter of the insert by a plurality of grooves extending between the leading edge and trailing edge of the interface, to provide coolant relief to the outside diameter of the insert at the interface with the drilled hole. The drilling inserts of the invention provide reduced friction and heat generation while maintaining high stability, and operate to prevent accumulation of materials on surfaces of the drilling inserts at the outside diameter of the insert. This enables higher penetration rates and operating speeds while maintaining integrity of the drilling inserts.

## Description

### TECHNICAL FIELD

The present invention relates to drilling inserts and drill tool assemblies and methods for drilling metallic or other materials, to provide improved performance in the machining of different types of modern materials used in the manufacture of goods. The drilling insert of the invention provides coolant relief to the outside diameter of the insert at the interface with the drilled hole. The drilling inserts of the invention provide reduced friction and heat generation while maintaining high stability and preventing accumulation of materials on surfaces of the drilling inserts. This enables higher penetration rates and operating speeds while maintaining integrity of the drilling inserts.

### BACKGROUND OF THE INVENTION

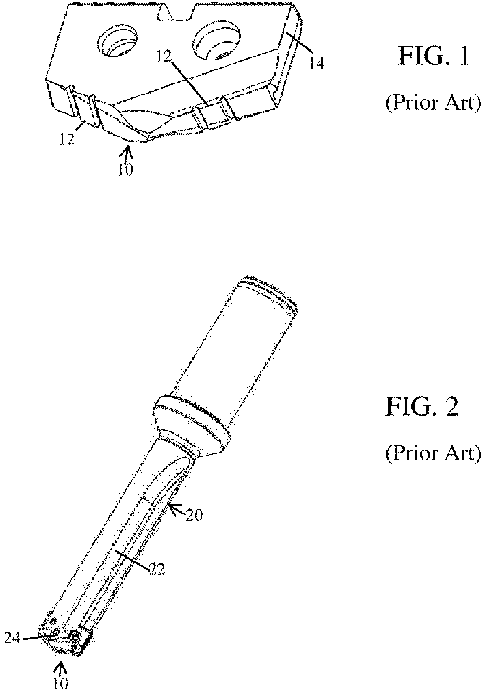

In the machining of holes into metallic materials, it has been customary to employ solid twist drills or spade drilling inserts. With reference to FIGS. 1 - 3, a prior spade drilling insert 10 is constructed as a flat, generally rectangular plate of hard material such as tungsten carbide that is imparted with a point and cutting edges 12 on its forward side. The outside edges 14 that form the outside diameter of the insert 10 form an interface with the side of the drilled hole. The spade insert 10 is assembled into a holder 20 with a front end for receiving the spade insert 10. As seen in FIG. 2, the holder 20 may have a straight flute 22 on each side associated with two cutting edges 12 of the insert 10, or helical flutes associated with the cutting edges. The flutes 22 evacuate chips after being formed at the cutting edges in conjunction with a coolant fluid supplied to the forward end of the holder 20 via a through tool coolant supply and outlets 24. As the insert 10 becomes worn from use, the insert can be quickly and economically replaced with another insert 10. In many applications, this is preferable to conventional twist drills which are either expensive to replace or must be re-sharpened through a time-consuming process. Inserts are also used in other cutting tools for machining of workpieces, such as in turning, boring, planing, shaping, machining, and reaming processes for example, and similar problems may be encountered in such applications.

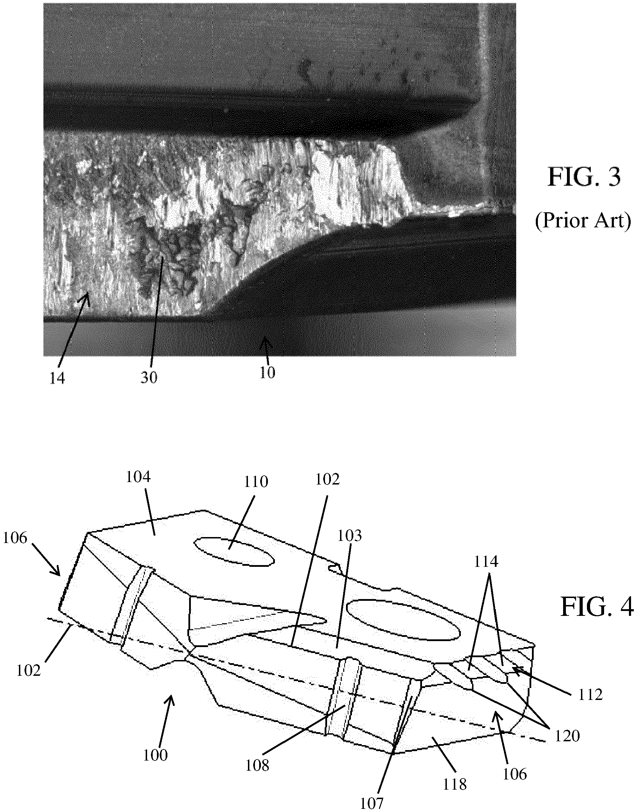

In the metal drilling industry, coolant is used to achieve better tool performance. Using coolant provides lubricity, heat dissipation from the tool, and aids in chip evacuation. This results in a tool that can operate faster and achieve longer tool life. Though the use of coolant in drilling products to various industries is typical, a need still exists in the drilling tool industry for an improved coolant delivery method that provides coolant relief to certain areas of the tool where problems such as heat generation, material build up or other problems can occur. Though such prior drilling inserts are functional, the interface areas at the land surfaces 14 at the outside diameter of the drilling insert 10 are susceptible to the generation of significant heat and friction, which in turn can cause adhesion of materials, such as swarf or fines, to the surfaces adjacent the interfaces during the drilling process. As seen in FIG. 3, material 30 can adhere and accumulate adjacent the interface at the outside diameter 14 of the insert 10, leading to degradation of performance in the drilling operation. The problem of adhesion of cut materials at these locations on the insert 10 is exacerbated by modern materials used in the manufacture of products, which are designed with a variety of properties for attaining particular performance characteristics. Such materials may create undesirable heat, friction and/or adhesion, as seen in FIG. 3. These undesirable effects are amplified by the increasing desire to drill holes faster in high production environments. There is therefore a need to alleviate the problems associated with the outside diameter of the drilling insert that are encountered in many applications and with different materials.

### SUMMARY OF THE INVENTION

The invention is therefore directed to a drilling tool which achieves the beneficial effects of minimizing undesirable heat, friction and adhesion of materials in the region of the outside diameter of the drilling insert tools of this type. The invention according to an example provides a drill insert comprising a drill insert body having a first end opposite a second end, first and second side locating surfaces and a first land surface opposite a second land surface at the outside diameter of the body. The first end of the drill insert body has cutting edges associated therewith, and the first and second locating surfaces together locating the insert with respect to a drill insert holder. The first and second land surfaces have leading and trailing edges and form an interface with the side of a drilled hole over at least a portion thereof. The first and second lands include a plurality of spaced apart grooves extending between the leading and trailing edges of the interfaces to allow coolant fluid to flow adjacent the trailing edge of the interfaces at the first and second lands and outside diameter of the insert.

In another example, the drilling insert comprises a body with a rotational axis, a bottom surface, first and second side surfaces and a front surface and at least two outside surfaces forming the outside diameter of the body and defining the interfaces between the body and side of the hole being drilled. There are provided cutting edges associated with the front surface extending from the rotational axis of the body to the at least two outside surfaces. Each of the at least two outside surfaces has a plurality of grooves in the body extending laterally through the interface of the at least two outside surfaces with the side of the hole, the plurality of grooves arranged at an orientation angle for coolant to enter from the bottom of the drilled hole and be dispersed coolant in the area adjacent the trailing side of the interfaces.

The drilling insert mates with a holder having a rotational axis and first and second clamp arms which may form a mounting slot for example, to which the locating surfaces of the drilling insert are attached. A through tool coolant supply associated with the holder, to supply coolant at the forward end of the holder adjacent the drilling insert. Chips formed by the cutting edges are moved by the coolant to a flute in the holder for evacuation. The plurality of grooves formed with respect to each outside diameter interface of the drilling insert are arranged to remove materials that may otherwise adhere to the surfaces adjacent the interfaces of the insert with the side of the formed hole, and dissipate heat and friction at the interfaces. By reducing heat, friction, and adhesion, the arrangement allows for enhanced performance at higher speeds over prior drill designs. These beneficial effects are accomplished by the design providing relief in the outside diameter that allows coolant from the leading edge of the flute to be directed through the surface contact area of the outside diameter. The arrangement allows coolant entry from the leading edge of the flute, while also breaking up the surface contact area of the outside diameter with the hole wall to further reduce friction. At the same time, the arrangement maintains substantial linear contact area throughout the entire interface region for increased stability during drilling.

The first and second locating surfaces together may locate the insert with respect to a drill insert holder and chip evacuating flutes associated with the drill insert holder.

The first and second land surfaces may include at least one margin surface that forms the interface with the wall of the drilled hole, the at least one margin surface configured in a shape selected from cylindrical or helical with respect to the rotational axis of the drilling insert. Optionally, the plurality of grooves may extend between the leading and trailing sides of the at least one margin on each land surface.

At least one of the plurality of grooves may have a curved configuration. The at least one curved groove may be helical.

The invention also provides a method of delivering coolant to the area of the interfaces between a drilling insert and the wall of the drilled hole in a drilling operation. A drilling tool comprising a holder having first and second ends and a rotational axis, and a drilling insert with cutting edges mounted in the holder, the drilling insert has at least two interfaces engaging the wall of the drilled hole. A plurality of grooves extend through each of the at least two interfaces with the wall of the hole. The drilling insert is rotated to cut a hole in a workpiece, with coolant supplied under pressure toward the bottom of the hole with the plurality of grooves arranged to allow coolant to flow through the interfaces to the areas adjacent both sides of the interface.

The invention further provides a drilling system comprising, a holder having a rotational axis and drilling insert mounting end, a shank and coolant delivery outlets, a drilling insert formed as a body with bottom, top, sides and land surfaces at the outside diameter, the top including a plurality of cutting edges, wherein the land surfaces each form an interface with the side of a drilled hole over at least a portion thereof, the interfaces having leading and trailing edges, and wherein a plurality of grooves extend at an orientation angle for coolant to enter from the bottom of the drilled hole and be dispersed in the area adjacent the trailing side of the interfaces.

The invention yet further provides a method of dispersing coolant in a drilling operation using a drilling tool comprising a holder having first and second ends and a rotational axis, with a drilling insert configured to be fixed in association with the first end and the second end of the holder configured to be attached in a drilling machine, and wherein the drilling insert includes first and second cutting edges extending from the rotational axis, and first and second land surface at the outside diameter of the insert with at least a portion of the land surfaces forming an interface with the wall of a drilled hole, wherein a plurality of spaced apart grooves extend through the interfaces from the leading to the trailing edges of the interfaces, and rotating the insert to machine a workpiece while directing an amount of coolant under pressure toward the bottom of a drilled hole, wherein the plurality of grooves allow coolant fluid to flow through the interfaces and adjacent the trailing edge of the interfaces at the outside diameter of the drilling insert.

The above improvements and advantages along with other objects and advantages of the present invention will become readily apparent from a reading of the description of various examples taken in conjunction with the drawings and the claims.

### BRIEF DESCRIPTION OF THE DRAWINGS

The invention and characteristics thereof are described in more detail in the following by way of examples with reference to the drawings, in which:
FIG. 1 is a view of a prior art drilling insert.
FIG. 2 is a view of the prior art drilling insert of FIG. 1 in a holder.
FIG. 3 is an image of the outside diameter of a drilling insert such as shown in FIG. 1 after use in forming a hole in a metal workpiece.
FIG. 4 is a view of the drilling insert according to a first example of the invention.
FIG. 5 is a partial view of the drilling insert of the example of FIG. 4.
FIG. 6 is an image of the outside diameter of a drilling insert such as shown in the example of FIG. 4 after use in forming a hole in a metal workpiece.
FIG. 7 is a side view of another example of a drilling insert according to the invention.
FIG. 8 is a side view of another example of a drilling insert according to the invention.
FIG. 9 is a side view of another example of a drilling insert according to the invention.
FIGS. 10 and 11 are side views of opposing land surfaces on the drilling insert according to another example of the invention.
FIGS. 12 and 13 are side views of opposing land surfaces on the drilling insert according to another example of the invention.
FIGS. 14 and 15 are views showing the orientation of grooves in examples of a drilling insert according to the invention.
FIGS. 16 and 17 are views showing the trajectory of grooves in examples of a drilling insert according to the invention.
FIG. 18 is a view relating to an alternative groove configuration formed in the drilling inserts according to the invention.
FIGS. 19 - 21 show views relating to alternative land surface and margin configurations with a plurality of grooves formed therein in further examples of drilling inserts according to the invention.

### DESCRIPTION OF THE INVENTION

Turning now to examples of the invention, it will be noted that the coolant supply configurations provide distinct advantages in association with drilling tools used for hole making. Known coolant configurations for drills may include through coolant drills that are designed with coolant exiting from the insert holder adjacent the cutting edges of the insert toward the bottom of the drilled hole. Though the coolant flows from the bottom of the hole toward the flutes of the holder, the outside diameter of the insert is not supplied with coolant to alleviate heat and friction at the interfaces of the insert with the wall of the drilled hole, and materials can adhere to the insert as noted with respect to FIG. 3 above. In the examples of the invention, the arrangement of coolant supply creates a superior coolant dissipation to better target the entire area of the interfaces at the outside diameter of the insert and reduce friction and heat build up or adhesion of materials to the insert. The examples are directed to improved coolant delivery systems and methods to enhance drilling performance.

Turning to FIGS. 4-5, there is illustrated a first example of a drilling insert assembly generally indicated at 100. The drilling insert 100 is configured to be positioned in a holder as noted with respect to FIG. 2 for example, with the holder having a clamping or locating slot into which the drilling insert 100 is positioned and attached. The drilling insert 100 is precisely positioned with respect to the holder to perform the desired drilling function in conjunction with the holder, and allows replacement of the insert 100 when worn. The insert 100 has a double effective drilling geometry with a point geometry comprising a plurality of cutting edges 102 which are precisely positioned with respect to the rotational axis of the holder to minimize errors in a resulting drilling operation.

The drilling insert 100 may be in the form a spade drill blade, with cutting edges 102 at the front end and side locating surfaces 104 of the blade being generally parallel with the rotational axis of a holder such as shown in FIG. 2, once the drilling insert 100 is positioned and secured therewith. The drilling insert 100 has a thickness, and includes at least two land surfaces 106 with at least a portion that engages the wall of a drilled hole during drilling. The at least two cutting edges 102 on drilling insert 100 extend from the axial center to the outside diameter at lands 106. The cutting edges 102 may include a plurality of drilling sections, may be straight or curved, and may include chip breakers 108 or other structures to create smaller chips in association with the cutting edges 102. The cutting edges provide double effective cutting of the material when rotationally driven in conjunction with a holder. The mounting holes 110 allow connection to clamp arms of a holder for example, to suitably locate the insert 100 with respect to the holder.

In this example, the arrangement of the at least two land surfaces 106 allow the application and flow of lubricating coolant directly to the areas adjacent the interface between the land surfaces 106 and the wall of the drilled hole. Each land surface 106 defines an interface with the wall of the drilled hole, which as noted, is subject to friction and heat generation, as well as possible adhesion of cut materials at the areas adjacent the interface of land surfaces 106. In this example, the land surfaces 106 include margins 112 that define the interface with the side of the drilled hole. Each margin 112 includes a plurality of relief areas, being grooves 120 that interrupt the interface of margin 112 with the wall of the drilled hole. The plurality of grooves 120 are spaced apart along the margin 112, and oriented transversely to the margins 112 to extend through the margin 112 at the outside diameter of the insert 100. The plurality of grooves 120 are open on each end to the leading edge and trailing edge of the flute associated with the insert 100 and holder it is mounted in. The open ends of the plurality of grooves 120 allow for coolant to enter and flow through the grooves 120 during the drilling cycle, thus providing enhanced cooling and lubrication at the area of the interface of each land 106. The lands 106 have clearance behind the margins 112, and the flow of coolant through the plurality of grooves 120 effectively disperse any cutting materials that may otherwise tend to adhere to this clearance surface or in the area adjacent the interface. This is particularly the case for materials such as austenitic stainless steels, low carbon steels or other steels or materials that tend to adhere and build up on cutting edges or other areas of the drilling insert. The arrangement of the invention using numerous small grooves 120 throughout the region of the outside diameter creates multiple margin contact areas 114 spaced across the entire region of the outside diameter for improved heat dissipation while maintaining drill stability over prior land designs. For various applications or materials, the percentage of the margin 112 that is relieved by the plurality of grooves 120 may be between 30 to 70% of the total margin area. The size and location of the plurality of grooves 120 are defined in a way to allow and promote coolant flow therethrough while blocking swarf entry into the region. This is provided by arranging the plurality of grooves 120 at a transverse angle that promotes dispersion of coolant as desired while minimizing the ability for swarf or fines from entering as the size of the grooves at the interface is very small. The plurality of grooves 120 may be formed as a radius with upper edges at an obtuse angle related to the outside diameter, or in another suitable shape or configuration. Alternatively, the relief areas could be formed as holes extending through the insert body adjacent the margins 112. The holes could extend through the interface from the leading to trailing edge of the interface to maintain stability of the margin while dispersing coolant to the trailing edge to provide the desired benefits. Such alternate relief areas such as holes may be positioned to direct coolant to particular areas adjacent the interface as may be desired, and could be used together with grooves 120 or the like.

In this example, the plurality of grooves 120 extend through the margin 112 to open adjacent the relief surface 118 on the land surface 106. A first groove 120 is positioned in predetermined spaced relation to the cutting edges 102, such as at the interface of the cutting lip surface 103 formed below the cutting edges 102 with the margin 112. This arrangement leaves enough margin 114 at the location adjacent the cutting edges 102, to maintain stability during drilling, while allowing the flow of coolant in this region of the interface of margin 112 with the wall of the drilled hole. The upper margin portion 114 adjacent the cutting edges 102 is dimensioned to be larger than the margin areas 114 between the grooves 120 along the margin 112. This location nearest the cutting edges 102 is susceptible to the possible adhesion of materials due to the proximity to the cutting edges 102. The first or upper groove 120 may therefore be particularly positioned to line up with the intersection of the back side of the cutting lip 103 and the thickness of the insert to prevent adhesion of materials in this area while still providing sufficient stability during drilling. Generally, it is desired that the distance between the first groove 120 from the cutting edge 102, which may include a corner clip 107 associated with the outside corner of the cutting edge, be at least about 0.015" (approx. 375 microns), but this distance may vary depending on material or application for example. A distance of between 0.025" (approx. 625 microns) and 0.040" (approx. 1mm) may provide additional margin stability in the region closest to the cutting edge 102. The distance or spacing between the first of the plurality of grooves from an adjacent groove 120 is generally less than the distance from the cutting edge 102 to the first groove 120.

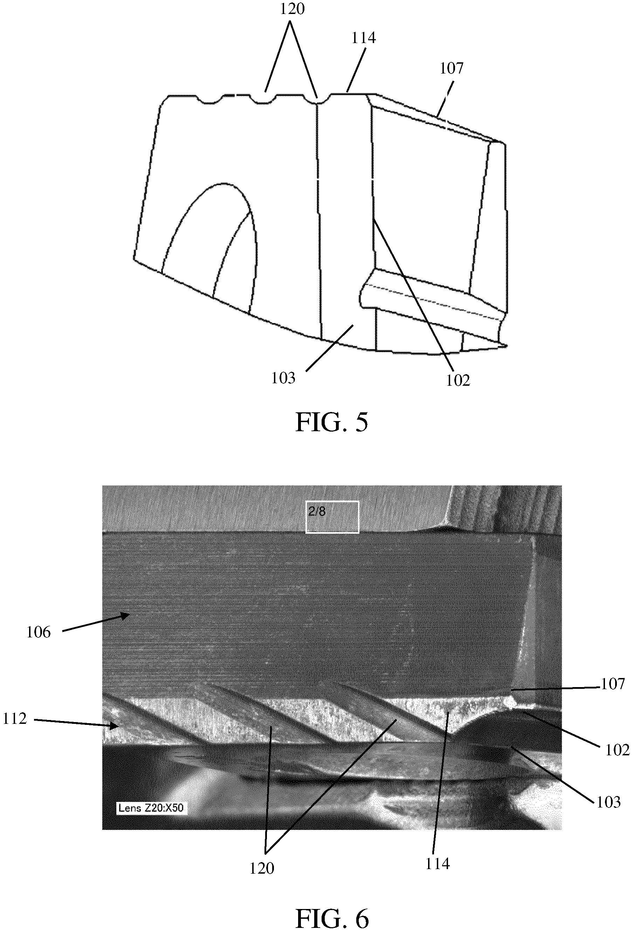

After positioning the first groove 120 in the desired position in relation to the cutting edge 102 and portion of the margin 112 adjacent the cutting edges 102, additional grooves 120 are provided in spaced relation to the first groove along the length of the margin 112. The remaining margin areas 114 between the grooves 120 are sized to minimize undesirable heat, friction, and resulting increased wear of the margin areas 114 while maintaining stability of the tool during drilling. This allows higher penetration rates to be achieved in the drilling operation. The spacing between grooves 120 forming the further margin areas 114 is at least 0.005" (approx. 125 microns), but can be increased based on the size of the insert and/or materials or applications in which the insert 100 is used. For example, the spacing between grooves 120 may be in the range of 0.010" (approx. 250 microns) to 0.025" (approx. 625 microns), and the spacing may be varied between individual grooves 120.
The coolant outlets in a holder provide coolant directed at the bottom of the hole which then is directed out of the hole via the flutes of the holder associated with each cutting edge 102 to facilitate chip removal. The arrangement of the plurality of grooves 120 allow flow of some coolant through the interface at the margins 112 by the force of the coolant after hitting the bottom of the hole and due to the rotation of the drilling insert 100 during drilling. This dispersal of coolant at the outside diameter disrupts or dislodges particles from adhering to the insert surfaces adjacent the margin interfaces. The orientation of the plurality of grooves 120 is at an angle to promote the dispersion of coolant in the areas adjacent the interfaces and through the interfaces. As seen in FIG. 6, the arrangement of the plurality of grooves 120 substantially prevents adhesion of materials in the area of the margin interface on insert 100.

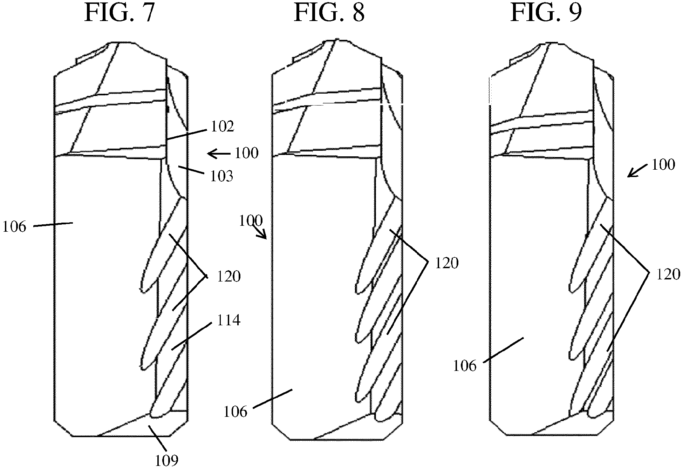

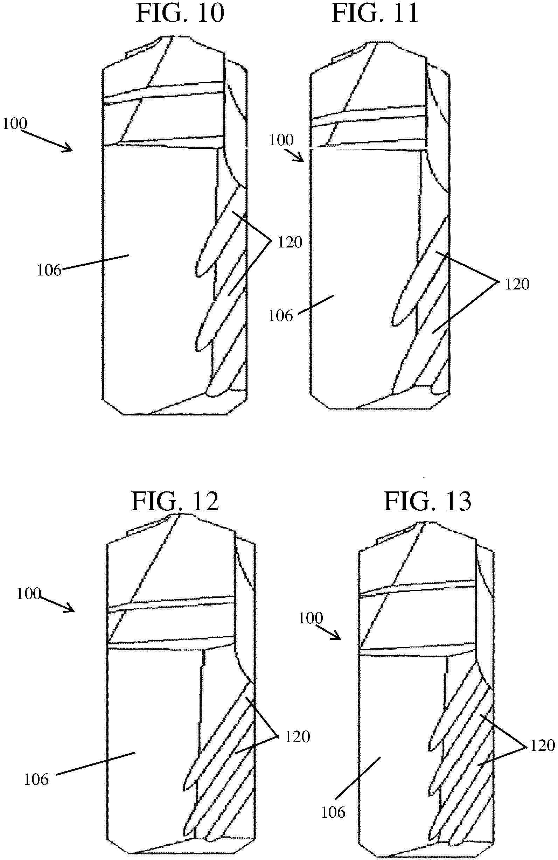

The number and position of grooves 120 at the interface of margin 112 can vary depending on size of the insert, materials being drilled or particular application as may be desired, and grooves 120 can be uniformly or non-uniformly spaced along the length of the margin 112 as shown in FIG. 7. As seen in this example, the grooves extend between the leading edge of the margin 112 and through the trailing edge at an orientation angle relative to the plane of the margin 112. The lowermost groove 120 may extend between the leading edge of margin 112 and bottom locating surface 109 of the insert 100. Alternatively, the spacing of grooves 120 may be increased from the front end of the margin 112 as seen in FIG. 8, or decreased from the front end of the margin 112 as seen in FIG. 9. The spacing of grooves 120 may also differ from one land 106 to the other as shown in FIGS. 10 and 11, which show the opposing lands 106 of an insert 100. Further, the number of grooves 120 can vary depending on the length of the margin 112 or cutting lip 103 of insert 100. As seen in FIGS. 12 and 13 which shows the opposing land surfaces 106 of an insert 100 for example, the number of grooves 120 can also vary from one land surface 106 to the other. The ability to position the grooves 120 in relation to the interfaces on each land 106 and one another in these various arrangements enable optimizing performance for use with a particular material or in a particular application, by controlling the flow of coolant from the leading edge to the trailing edge of the margin 112 in relation to the cutting edges 102 and bottom of the hole. The dispersal of coolant across the interface of margins 112 in a desired manner minimizes friction and heat generation and flushes any materials to prevent adhesion to the surfaces at the outside diameter of the insert 100.

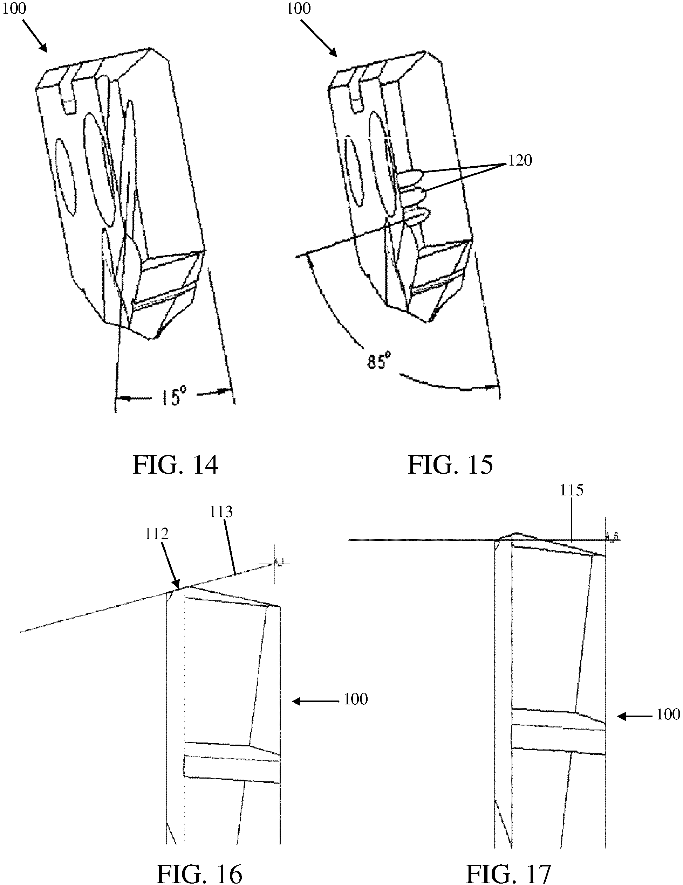

The orientation angle of the grooves 120 are arranged to facilitate the dispersal of coolant across the interface of margins 112 in a desired manner to minimize friction and heat generation, and flush any materials to prevent adhesion to the surfaces at the outside diameter of the insert 100. As seen in the example of FIGS. 4 and 5 for example, the angle of grooves 120 are inclined about 25° relative to the thickness of the insert and plane of the interface of margin 112 from the cutting edges 102 toward the bottom of the insert 100. The orientation of grooves 120 relative to the thickness of the insert 100 may vary generally between about 15° and less than 90°, as shown in FIGS. 14 and 15 for example. For some applications, an angle of between 20° and 30° has been found to be effective, with the orientation of the grooves 120 facilitating movement of coolant from the bottom of the hole to the interface, with some directed into and moving through the grooves 120 to the trailing side of the interface. As an alternative, the grooves 120 may also be at different orientations relative to one another, to disperse coolant in a desired manner, such as to facilitate targeting a particular area at the interfaces of the insert at the outside diameter.

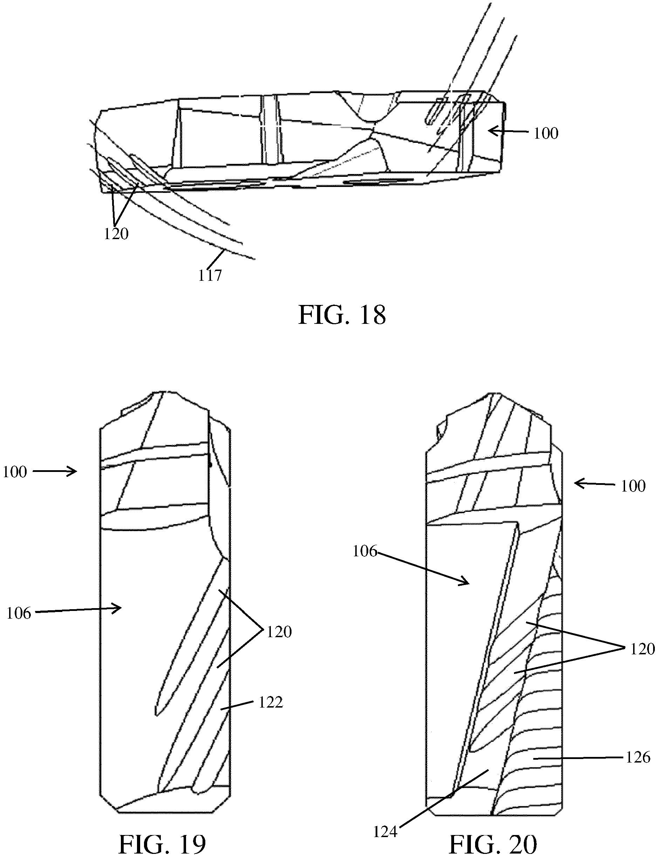

The size and position of the grooves 120 at the interface between the margin 112 and wall of the drilled hole also enable the desired volume of coolant to be dispersed through the interface boundary. The coolant may be supplied under pressure of about 1000 psi or more for example, but other pressures may be suitable or preferred depending on the application and materials being machined. The coolant under pressure is thus forced to the area of the interfaces of margins 112, and some allowed to flow through the interface via the grooves 120. As noted above, the orientation angle of grooves 120 facilitates control of how the coolant moves between the leading and trailing sides of the interface at the margins 112. The trajectory angle of the grooves 120 in relation to the interface may also facilitate control and dispersion of coolant at the location of the interfaces. As seen in FIG. 16 for example, the grooves 120 may be formed at an angle which is substantially tangent to the interface at margins 112 as shown at 113, to proceed through the interface at approximately the same depth from the leading to the trailing edge of the margins 112. The size of the openings at the leading and/or trailing edge is controlled by the width and depth of the grooves 120, which may be between 0.002" - 0.015" (approx. 50 microns - 375 microns)_for example, but are generally configured as between 0.005"- 0.10" (approx. 125 microns - 250 microns). The margins 112 may be formed at an angle of about 100° measured normal to the centerline of the insert 100 for example, such as shown in FIG. 16. Alternatively, as shown in FIG. 17, the grooves 120 may be formed at an angle which is substantially normal to the centerline of the insert 100 to form a groove that increases in depth from the leading to the trailing edge of the margins 112 through the interface as shown at 115. The grooves 120 may also be formed to have a decreasing depth from the leading edge to the trailing edge, which will cause an increase in the pressure of coolant as it exits the groove. The grooves 120 may also be formed to have an increasing or decreasing width or a portion with a changed width as the grooves 120 proceed from the leading edge to the trailing edge of the interface. The grooves 120 may be formed to follow the curvature of the margin surface at the interface if desired. The groove trajectory angle may be between 60° and 120° relative to the centerline of the insert 100 for example, to allow dispersal and flow of coolant in the area of the interfaces as desired. To facilitate dispersal of coolant to disrupt adhesion of materials, the openings of grooves 120 on the trailing edge of the interface may be widened to cause coolant to spread out as it exits the grooves 120. Alternatively, the exit openings of the grooves 120 may be oriented to direct coolant fluid in a particular manner or coolant flow diverting structures may be provided in association with the opening at the trailing side of the interface, to control flow of and dispersion of coolant at the outside diameter of the insert, such as to target specific surface areas for example. As a further alternative, as shown in FIG. 18, the grooves 120 may be curved, such as formed as helical grooves 120, with uniform or varying depth from the leading to the trailing edge of the margins 112 through the interface at margins 112 as shown at 117. Thus, in operation, the formation of the grooves in relation to the interfaces at the outside diameter can vary to allow desired dispersal and movement of coolant in the regions of the interfaces.

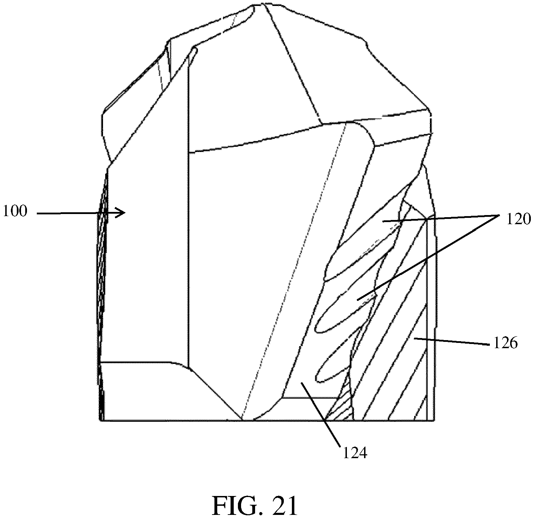

The configuration of the drilling insert 100 according to the invention can vary for various applications and materials, and the at least two lands associated with the insert may vary similarly, along with the interface with the side of the drilled hole. In other examples, such as shown in FIG. 19, the land 106 of the drilling insert 100 may have a cylindrical margin 122 that engages the side of the drilled hole over a portion thereof. The plurality of grooves 120 are formed to extend from the leading edge to the trailing edge of the interface with the wall of the drilled hole. Alternatively, as seen in FIGS. 20 and 21, the land 106 may be formed to have a helical margin 124 with the plurality of grooves 120 formed to extend from the leading edge of helical margin 124 to the trailing side of the interface with the wall of the drilled hole created thereby. Other configurations of margins 124 may be used, and it is also possible the inserts 120 may employ a plurality of margins that separately interface the wall of the drilled hole on the land surfaces. The plurality of grooves could be formed to extend from the leading edge to the trailing edge of the interface of the plurality of margins or with respect to each margin provided. In these examples, the plurality of grooves 120 extend from a flute portion 126 formed in the body of insert 100, that mates with a flute on the holder to which the insert 100 is attached. In relation to the margin configuration and interface with the side of the drilled hole, the plurality of grooves 120 provide the desired dispersion and movement of coolant at the location of the outside diameter of the inserts, and the variations noted previously may be incorporated into such alternative inserts 100.

While this invention has been described with reference to examples thereof, it shall be understood that such description is by way of illustration only and should not be construed as limiting the scope of the claimed invention. Accordingly, the scope and content of the examples are to be defined only by the terms of the following claims. Furthermore, it is understood that the features of any example discussed herein may be combined with one or more features of any one or more examples otherwise discussed or contemplated herein unless otherwise stated.

## Claims

1. A drilling insert comprising,
a drill insert body having a first cutting end opposite a second mounting end, first and second side locating surfaces and a first land surface opposite a second land surface at the outside diameter of the body and a rotational axis,
the first cutting end of the drill insert body having cutting edges associated therewith, and the first and second side locating surfaces together locating the insert with respect to a drill insert holder,
the first and second land surfaces each forming an interface with the side of a drilled hole over at least a portion thereof, the interfaces having leading and trailing edges, and wherein a plurality of spaced apart grooves extend through the interfaces from the leading to the trailing edge of the interfaces to allow coolant fluid to flow through the interfaces and adjacent the trailing edge of the interfaces at the outside diameter of the drill insert body.

2. The drilling insert of claim 1, wherein there is a cutting lip associated with the cutting edges that extends to the outside diameter of the insert, and the first groove is positioned with the opening at the interface of the cutting lip at the outside diameter of the insert.

3. The drilling insert of claim 1, wherein the plurality of grooves are directed away from the first cutting end at an orientation angle with respect to the thickness of the drill insert.

4. The drilling insert of claim 1, wherein the plurality of grooves are directed at a trajectory angle with respect to the interfaces, to control the dispersion of coolant at the trailing edge of the interfaces.

5. The drilling insert of any one of the preceding claims 1 to 4, wherein the spacing between the plurality of grooves on each land surface is uniform or nonuniform.

6. The drilling insert of any one of the preceding claims 1 to 4, wherein the same or different number of grooves are provided on each land surface.

7. The drilling insert of any one of the preceding claims 1 to 4, wherein the first and second land surfaces include at least one margin surface that forms the interface with the wall of the drilled hole, the at least one margin surface configured in a shape selected from cylindrical or helical with respect to the rotational axis of the drilling insert, and the plurality of grooves extend between the leading and trailing sides of the at least one margin on each land surface.

8. The drilling insert of any one of the preceding claims 1 to 4, wherein at least one of the plurality of grooves has a curved configuration.

9. The drilling insert of any one of the preceding claims 1 to 4, the drill insert body is formed with a flute associated with each cutting edge and the plurality of grooves extend from each flute to the trailing side of the interface.

10. The drilling insert of any one of the preceding claims 1 to 4, wherein the width or depth of at least one of the plurality of grooves varies from the leading edge to the trailing edge.

11. The drilling insert of any one of the preceding claims 1 to 4, wherein the distance between the first groove from the cutting edge at the outside diameter of the insert is at least about 375 microns (0.015").

12. The drilling insert of any one of the preceding claims 1 to 4, wherein the distance between the other grooves of the plurality of grooves is less than the distance between the cutting edge and the first groove.

13. The drilling insert of claim 3, wherein the orientation angle of at least one of the plurality of grooves is different than the orientation angle of at least one other of the plurality of grooves.

14. The drilling insert of claim 3, wherein the orientation angle of the grooves is between 15° and less than 90°

15. The drilling insert of claim 4, wherein the trajectory angle of the grooves is between 60° and 120° relative to the centerline of the insert.
